# EUROPÄISCHE PATENTSCHRIFT

(11) **EP 0 595 143 B1**
(45) Veröffentlichungstag und Bekanntmachung des Hinweises auf die Patenterteilung: **11.09.1996**
(21) Anmeldenummer: 93116772.0
(22) Anmeldetag: 18.10.1993
(51) Int. Cl.: G21C 13/036

(54) **Verfahren zum Austausch eines einen Deckel eines Kernreaktordruckbehälters durchsetzenden Stutzens**
Method for replacing a tube crossing the closure head of a reactor pressure vessel
Procédé de remplacement d'une traversée du couvercle d'une cuve sous pression d'un réacteur nucléaire

(30) Priorität: 24.10.1992 DE 4236005
(43) Veröffentlichungstag der Anmeldung: 04.05.1994
(73) Patentinhaber: ABB Reaktor GmbH, D-68167 Mannheim (DE)
(72) Erfinder: Russ, Jakob, D-67354 Römerberg (DE); Günter, Bäro, Dr., D-69469 Weinheim (DE); Pötz, Franz, D-64646 Heppenheim (DE)
(74) Vertreter: Rupprecht, Klaus, Dipl.-Ing.

(56) Entgegenhaltungen:
- EP-A- 0 158 544
- EP-A- 0 288 745
- EP-A- 0 440 353
- WO-A-92/00591
- FR-A- 2 069 737
- US-A- 3 240 514

## Beschreibung

Die Erfindung betrifft ein Verfahren zum Austausch eines einen Deckel eines Kernreaktordruckbehälters zur Führung eines Steuerstabes durchsetzenden Stutzens, der in einer Durchgangsbohrung unter Einsatz einer Schweißverbindung relativ zum Deckel festgelegt ist.

Eine derartige Stutzendurchführung ist aus der Zeitschrift "Atomwirtschaft", Mai 1975, Seiten 254255 bekannt.

Die Schweißnaht stellt dort das tragende Verbindungsglied zwischen Stutzen und Deckel dar. Neben dem Innendruck muß die Schweißverbindung auch Seitenkräfte aufnehmen können, die z. B. einer Erdbebenauslegung zugrundeliegen. Der durch die Durchdringungskurve zwischen Stutzen und Deckelinnenseite vorgezeichnete asymmetrische Schweißnahtverlauf führt zu ungünstigen Spannungsbelastungen des Stutzens insbesondere unterhalb der Schweißverbindung. Da die Innenseite des Stutzens schweißnahtbedingte Spannungen aufweist, fördert das die Innenseite kontaktierende Medium, wie z. B. das Kühlmittel eines Druckwasserreaktors, das Entstehen von Spannungsrißkorrosion.

Nach längerem Betrieb einer Kernreaktoranlage ist es daher nicht auszuschließen, daß insbesondere im Bereich der Schweißnaht kleine Anrisse am Stutzen auftreten. Für den Austausch derartiger Stutzen soll ein Verfahren angegeben werden, das beim Ausbau des Stutzens die Struktur des Deckels wenig beeinflußt und einen spannungsarmen Einbau des Stutzens bewirkt.

Gelöst wird diese Aufgabe erfindungsgemäß durch die im Kennzeichen des Anspruches 1 angegebenen Merkmale.

Beim Anflächen wird nur ein geringer Bereich der ursprünglichen Schweißnaht entfernt. Ferner erleichtert das Ausbohren des im Deckel angeordneten Stutzenteils den Ausziehvorgang und verhindert eine Beschädigung der Deckelbohrung. Zusammen mit dem spannungsarmen Einbau also wird ein Stutzenaustauschverfahren angegeben, das eine nahezu vollständige Erhaltung der Deckelstruktur gewährleistet. Darüberhinaus erleichtert das Anflächen des Deckels das Ausziehen des Stutzens, da in diesem Bereich kein Reibwiderstand mehr besteht.

Aus der EP-A-0 288 745 ist zwar eine Stutzendurchführung eines Reaktordruckbehälterdeckels bekannt, die eine mit dem Stutzen und dem Deckel verschweißte Hülse aufweist. Die dort beschriebene Dichtungsanordnung gibt jedoch keinen Hinweis auf den Austausch eines unmittelbar mit dem Deckel verschweißten Stutzens.

Ferner ist aus der EP-A-0 440 353 das Ersetzen eines Druckbehälterstutzens durch eine Hülse bekannt. Nach dem Entfernen des Stutzens wird dessen Aufnahmebohrung auf einen größeren Durchmesser gebracht. Anschließend wird eine erste und eine zweite Hülse eingebracht, die jeweils die gesamte Wanddicke durchsetzen.

Zum Zwecke einer leichteren Arretierung der Hülse vor dem Schweißen wird vorgesehen, daß als Hülse eine mit einem Innengewinde versehene Gewindehülse verwendet wird, die auf ein dem Stutzen zugeordnetes Außengewinde aufgeschraubt wird.

Eine vorteilhafte Ausgestaltung des Verfahrens wird durch das Einbringen des neuen Stutzens unter einer relativ zum Deckel wirkenden Vorspannung erzielt.

Mit dieser Maßnahme werden beide Schweißnähte belastungsfrei und können als Dichtnähte ausgeführt werden. Die Vorspannung ist dabei so gewählt., daß sowohl die Axial- als auch die Horizontalkräfte kompensiert werden. Herrschen zwischen Stutzen und Deckel Preßsitzbedingungen, so wird darüber ein Teil der horizontalen Kräfte aufgenommen, so daß die Vorspannung entsprechend reduziert werden kann.

Vorzugsweise wird die Vorspannung durch Ziehen des an der Stützfläche anliegenden Stutzens aufgebracht, bevor die Gewindehülse gegen die Ringfläche angelegt wird und die Schweißnähte angebracht werden.

Die Stützfläche kann dazu senkrecht zur Stutzenachse verlaufen als auch eine in Richtung de Deckeloberseite gerichtete Kegelfläche sein.

Zur Erzielung einer Vorspannung kann auch ein zwischen dem Deckel und dem Stutzen angeordnetes Spannrohr eingesetzt werden. Dessen Verformungsweg im elastischen Bereich muß jedoch mindestens so groß sein, wie der Verformungsweg des zwischen der Ringfläche und der Stützfläche des Deckels eingespannten Deckelbereichs unter Beachtung möglicher Unterschiede in der Wärmedehnung.

Werden unterschiedliche Werkstoffe für dieses quasi als federndes Zwischenstück wirkende Spannrohr und den Stutzen eingesetzt, so ist auf Grund des unterschiedlichen Ausdehungskoeffizienten bei steigenden Temperaturen eine Beeinflussung der Vorspannung möglich.

Ausführungsbeispiele zur Verwirklichung des erfindungsgemäßen Verfahren sind nachfolgend anhand der Figuren 1 bis 9 beschrieben.

Dabei zeigt die
- Figur 1:: einen Querschnitt durch einen Reaktordruckbehälterdeckel mit den Stutzen,
- Figur 2 bis 7:: einen einzelnen Stutzen mit verschiedenen Schritten zur Durchführung des Austauschs,
- Figur 8:: einen unter Vorspannung eingesetzten Stutzen und
- Figur 9:: eine andere Ausgestaltung eines mit Vorspannung eingesetzten Stutzens.

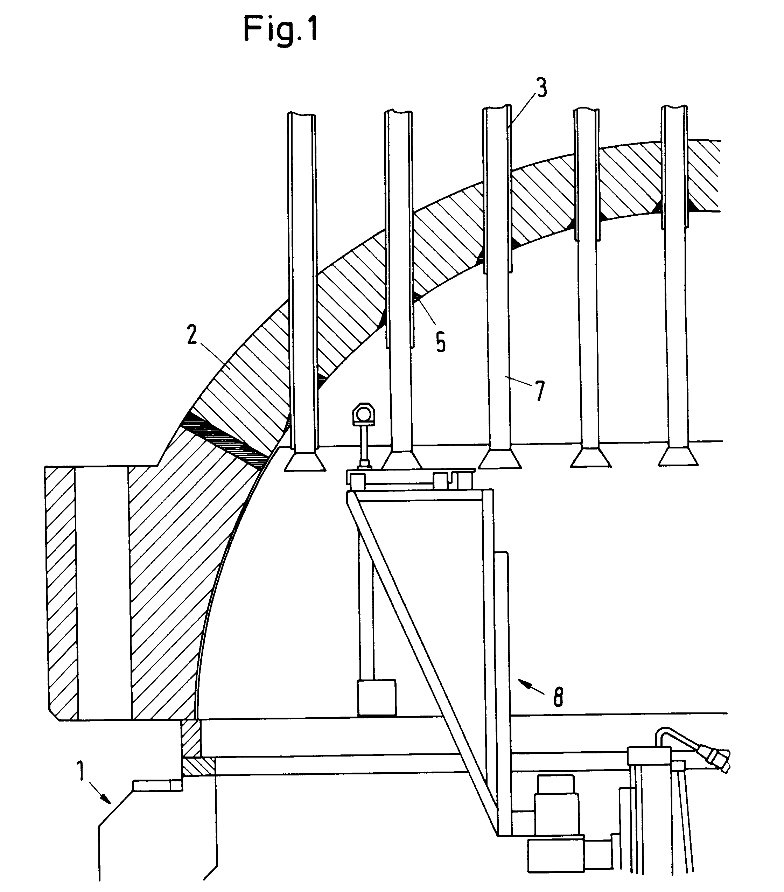

Die Figur 1 zeigt einen auf einem ringförmigen Traggestell 1 abgesetzten Reaktordruckbehälterdeckel 2. Der kalottenförmig ausgebildete Deckel 2 ist mit einer Vielzahl von Stutzen 3 versehen, die jeweils eine Preßsitzverbindung mit einer Durchgangsbohrung 4 eingehen und über eine Schweißnaht 5 mit der Innenseite 6 des Deckels verbunden sind. Jeder Stutzen ist unter Einhaltung eines Spaltes von einer Wärmeschutzhülse 7 durchsetzt. Durch die Wärmeschutzhülse ist beim bestimmungsgemäßen Einsatz des Deckels 2 ein nicht dargestellter Steuerstab geführt. Innerhalb des vom Deckel 2 und vom Traggestell 1 begrenzten Raums ist eine Einrichtung 8 zum Austausch von mit Schadstellen behafteten Stutzen angeordnet.

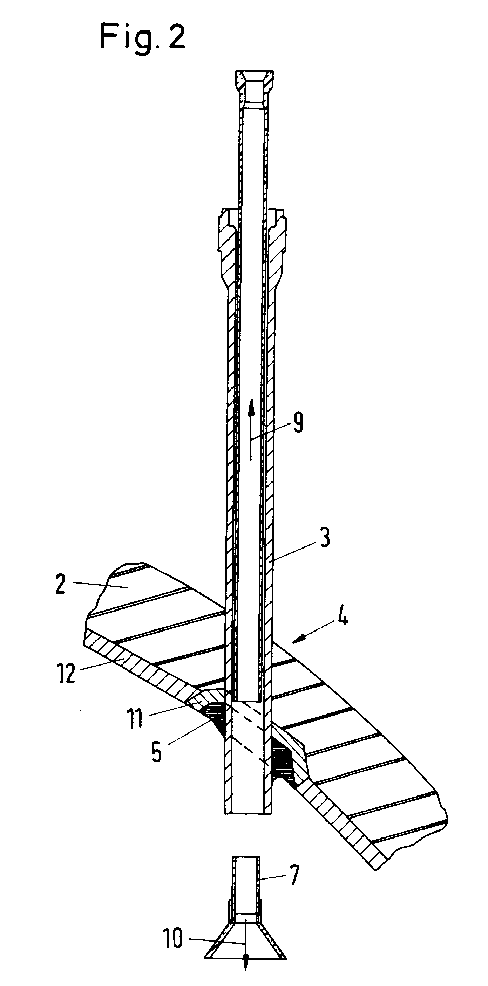

Die Figuren 2 bis 6 zeigen an einer Einzelheit der Figur 1 den Austausch eines Stutzens 3 nach dem erfindungsgemäßen Verfahren. Der Stutzen 3 ist im Bereich einer spannungsarmen Aufpufferung 11, an die eine Plattierung 12 angrenzt, mit dem Deckel 2 verschweißt. Nachdem die Wärmeschutzhülse 7 durchtrennt ist, wird die nun zweiteilige Wärmeschutzhülse in Pfeilrichtung 9 und 10 aus dem Stutzen 3 entfernt (Figur 2).

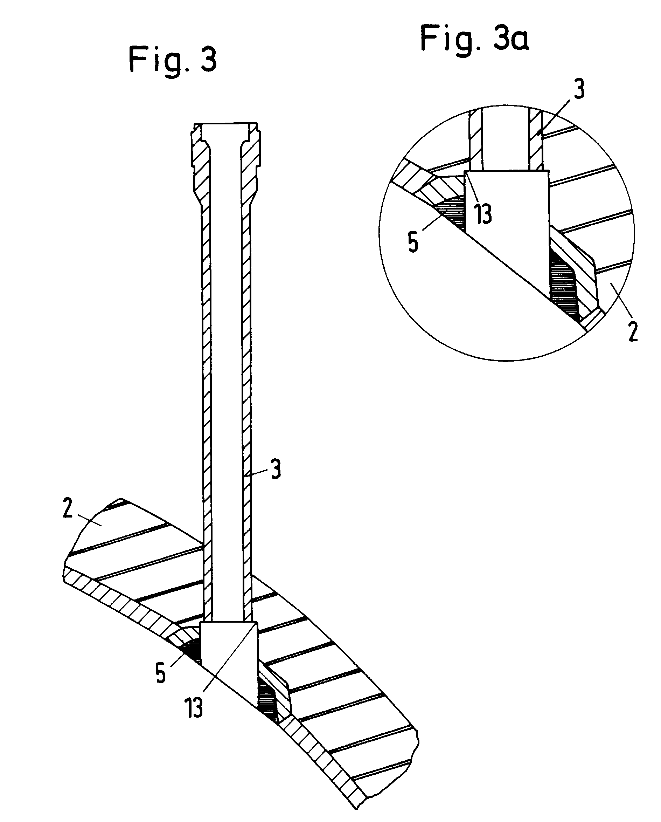

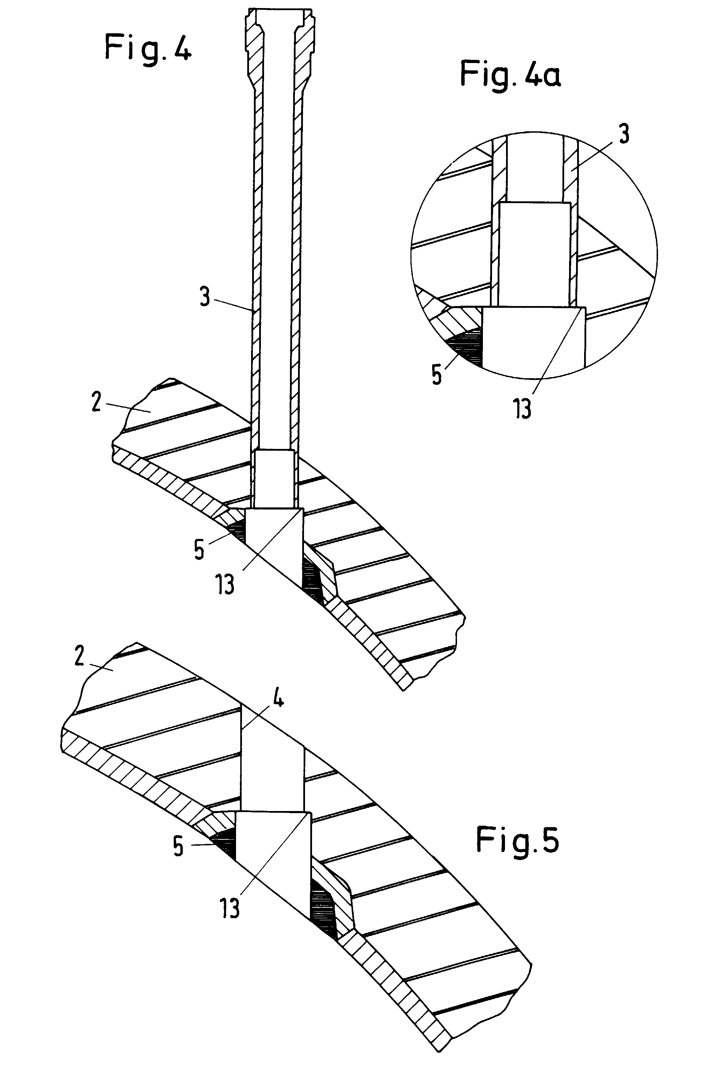

Mit einem nicht dargestellten Stirnfräser, dessen Außendurchmesser größer ist als der Außendurchmesser des Stutzens 3, wird der Stutzen soweit abgefräst, bis in der Dekkelunterseite eine geschlossene Ringfläche 13 gebildet ist, deren Außendurchmesser ein vorgebbares Maß größer als der Durchmesser des Stutzens ist (Figur 3 und 3a). Wie aus den Figuren 4 und 4a ersichtlich ist, wird nun der im Deckel 2 noch verbliebene Teil des Stutzens 3 unter Belassung einer dünnen Wandstärke von ca. 1 mm ausgebohrt. Mit einer nicht dargestellten Vorrichtung wird der Stutzen 3 gezogen, so daß die Durchgangsbohrung 4, abgesehen von der Freifräsung bis zur Ringfläche 13, in ihrer ursprünglichen Form unverändert erhalten bleibt.

Die Figur 5 zeigt einen Deckelausschnitt nach erfolgter Entfernung des Stutzens, woraus zu ersehen ist, daß die ursprüngliche Schweißnaht 5 im wesentlichen erhalten bleibt.

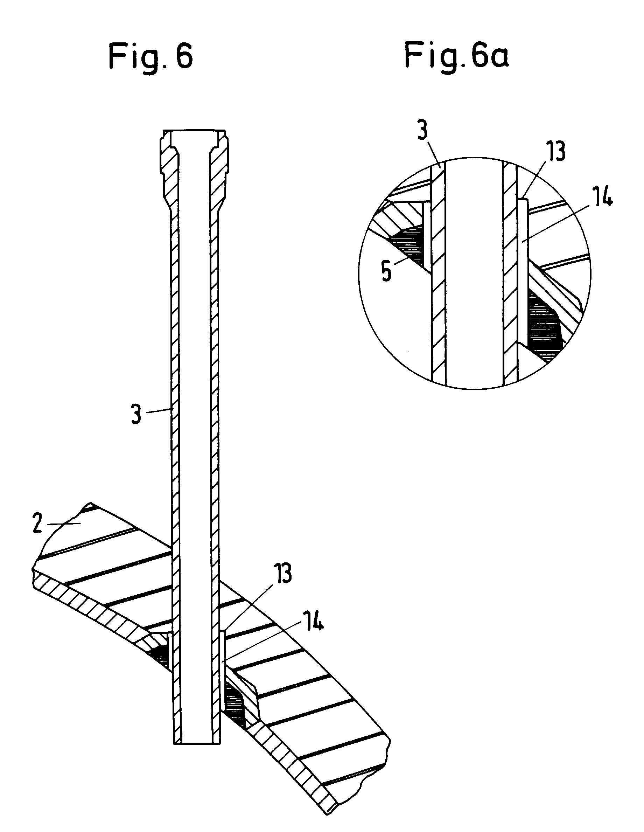

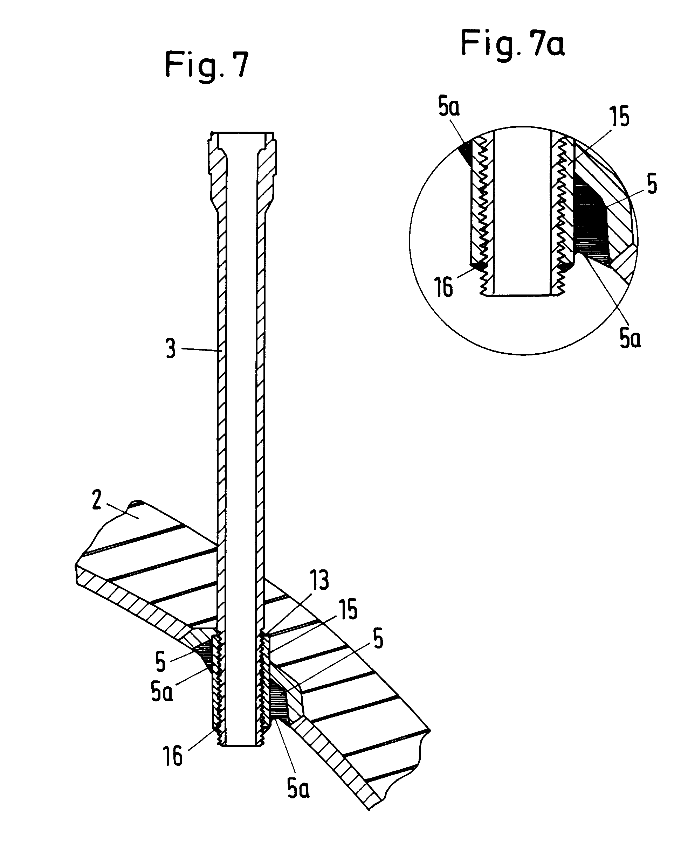

Aus der Figur 6, 6a ist der erste Schritt zum Einbau des Stutzens 3 zu erkennen. Er wird als Preßsitzverbindung in die Durchgangsbohrung 4 eingebracht. Im Bereich der Ausfräsung bis zur Ringfläche 13 verbleibt ein Ringraum 14, in den gemäß Figur 7, 7a eine mit einem Innengewinde versehene Gewindehülse 15 über ein entsprechendes Außengewinde des Stutzens 3 bis zur Anlage an der Ringfläche 13 eingeschraubt wird. In dieser Position wird im Bereich der ursprünglichen Schweißnaht 5 eine Dichtschweißnaht 5a zwischen dem Deckel und dem Stutzen 3 gelegt. Ein wegen dem geringen Umfang der Schweißnaht 5a sowieso nur geringer Wärme- oder Spannungseintrag wird durch die Gewindehülse 15 vom Stutzen 3 ferngehalten. Um das der Gewindeverbindung in axialer Richtung eigene Spiel zu eliminieren, wird zwischen der Gewindehülse 15 und dem Stutzen 3 eine Ringnaht 16 gelegt.

Anstelle der dargestellten Gewindehülse 15 kann auch eine gewindefreie Hülse im Zusammenhang mit einem gewindefreien Stutzen eingesetzt werden. Die Hülse wird dann über den Stutzen bis zur Anlage an der Ringfläche 13 eingeschoben und mit der ursprünglichen Schweißnaht 5 verschweißt. Anschließend wird die Ringnaht zwischen dem Stutzen und der gewindefreien Hülse gesetzt.

Mit der Hülse bzw. Gewindehülse werden die Schweißspannungen vom Stutzen ferngehalten. Die Ringnaht zwischen der Hülse bzw. der Gewindehülse und dem Stutzen weist einen symetrischen Spannungseintrag auf und ist wegen ihres Fernliegens zur Deckelinnenseite zum Spannungsfreiglühen leicht zugänglich.

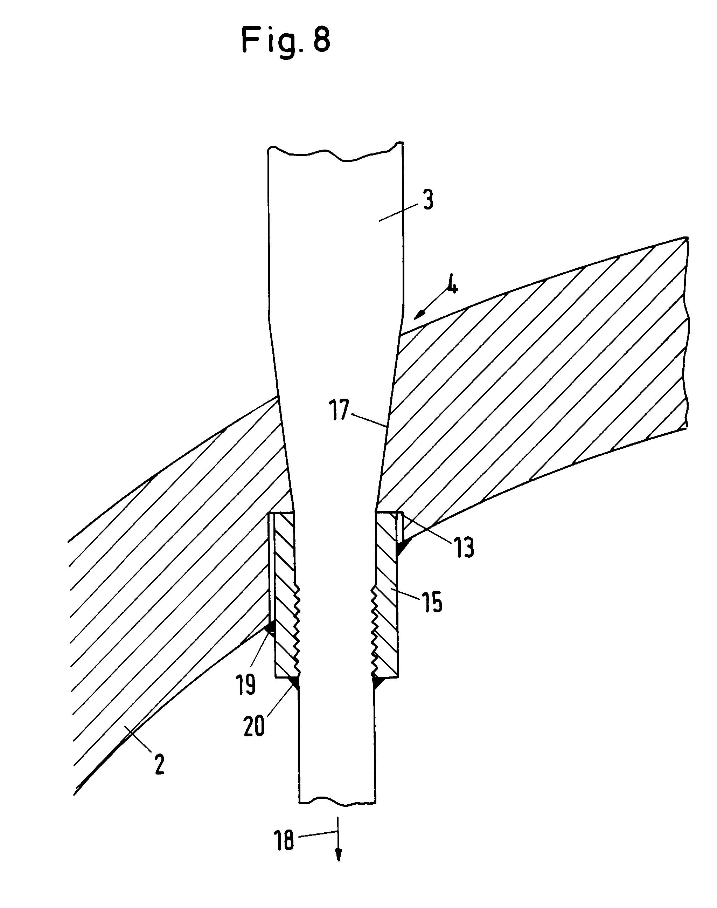

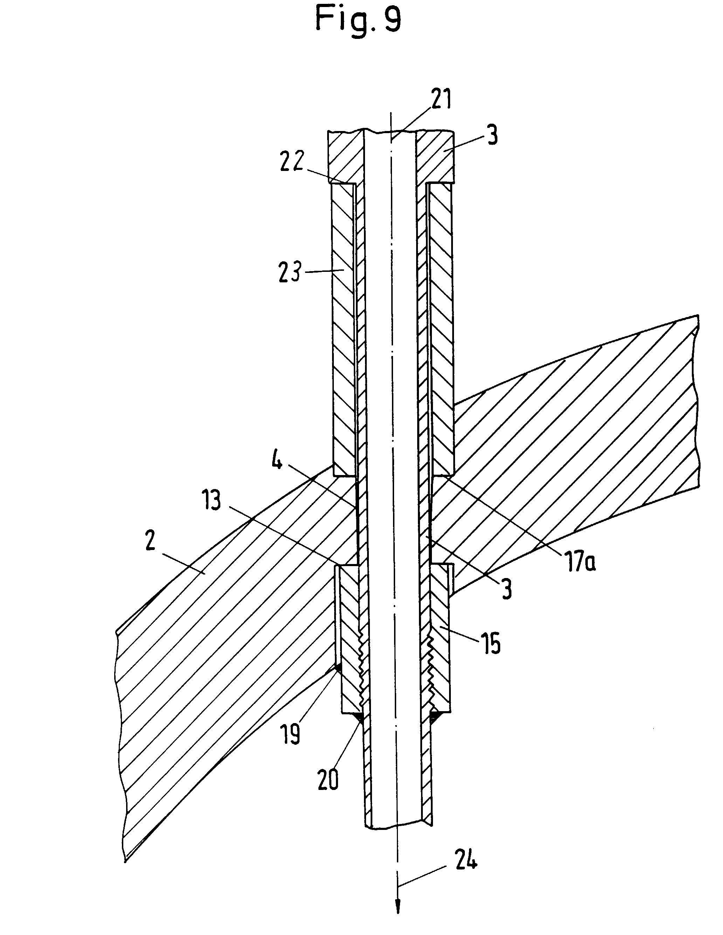

Nach einem anderen, in den Figuren 8 und 9 erläuterten erfindungsgemäßen Verfahren erfolgt der Einbau des Stutzens 3 unter Vorspannung. Dazu erhält nach dem Ausführungsbeispiel nach Figur 8 die Durchgangsbohrung 4 eine als Kegel ausgebildete und in Richtung Deckelinnenseite verjüngend zulaufende Stützfläche 17, die mit einer Conusausbildung des Stutzens konform geht. Nachdem der Stutzen 3 eingesetzt, der Kegelkontakt hergestellt und die Gewindehülse 15 an der Ringfläche 13 angelegt ist, greift ein nicht dargestelltes Ziehgerät an dem in den Innenraum des Deckels 2 ragenden Stutzenende an und bringt durch Ziehen in Pfeilrichtung 18 die gewünschte Vorspannung ein. Das Ziehgerät hält die Vorspannung aufrecht bis die Gewindehülse 15 an der Ringfläche 13 zur Anlage gebracht ist. Jetzt wird das Ziehgerät entfernt und die Schweißnähte 19 und 20 gelegt. Da die Vorspannung so gewählt ist, daß auf den Stutzen wirkende Axial- und Horizontalkräfte kompensiert werden, sind die Schweißnähte belastungsfrei und werden lediglich als Dichtnähte ausgeführt.

Bei dem in Anlehnung an die Figur 9 beschriebenen Verfahren wird von der Deckeloberseite aus eine senkrecht zur Achse 21 des Stutzens 3 verlaufende Stützfläche 17a eingebracht. Der in die Durchgangsbohrung 4 eingeführte Stutzen 3 ruht über seine Schulter 22 unter Zwischenschaltung eines Spannrohres 23 auf der Stützfläche 17a. Nachdem die Gewindehülse 15 ihre Position eingenommen hat, wird auch hier in Pfeilrichtung 24 die erforderliche Vorspannung aufgebracht und vor Aufhebung der Ziehkraft die Gewindehülse 15 an die Ringfläche 13 angelegt. Die danach anzubringenden Schweißnähte 19 und 20 haben auch hier lediglich Dichtungsaufgaben. Das Auftreten von Spannungsrißkorrosion im Bereich der Schweißnähte kann daher ausgeschlossen werden.

Zur Erzielung einer wirksamen Vorspannung muß der im elastischen Bereich liegende Verformungsweg des Spannrohres 23 mindestens so groß sein, wie der Verformungsweg des zwischen Ringfläche 13 und Stützfläche 17a angeordneten Dekkelbereichs. Der Stutzen und das Spannrohr bestehen aus dem gleichen Werkstoff, so daß auch bei Erwärmung der einmal gewählte Vorspannungswert erhalten bleibt. Soll eine Änderung des Vorspannungswertes bei bestimmten Temperaturen angestrebt werden, kann ein Spannrohr aus einem Material mit einem anderen Wärmeausdehnungskoeffizienten eingesetzt werden.

Bei dem Ausführungsbeispiel nach der Figur 9 kann der Bereich zwischen der Durchgangsbohrung 4 und dem Stutzen 3 wahlweise als Preßsitzverbindung oder unter Belassung eines Spaltes ausgeführt werden. Die Ausführung als Preßsitz kommt mit einer Vorspannkraft von ca. 7 t aus, da die zu erwartende Horizontalkraft von dem Preßsitz kompensiert wird. Soll an der besagten Stelle ein Spalt vorgesehen sein, muß eine Vorspannkraft von wesentlich mehr als 7 t aufgebracht werden, da die horizontalen Kräfte durch die Flächenpressung der Stütz- und Ringfläche kompensiert werden müssen. Die den Einbau des Stutzens betreffenden Merkmale lassen sich auch bei der Herstellung von neuen Deckeln 2 einsetzen, bei denen selbstverständlich ein vorhergehender Ausbau eines Stutzens nicht gegeben ist.

## Patentansprüche

1. Verfahren zum Austausch eines einen Deckel (2) eines Kernreaktordruckbehälters zur Führung eines Steuerstabes durchsetzenden Stutzens (3), der in einer Durchgangsbohrung (4) unter Einsatz einer Schweißverbindung relativ zum Deckel festgelegt ist, gekennzeichnet durch folgende Merkmale:
- Abfräsen des Stutzens (3) von der Innenseite (6) des Deckels aus, bis in der Deckelunterseite eine geschlossene Ringfläche (13) gebildet ist, deren Außendurchmesser größer ist als der Außendurchmesser des Stutzens (3),
- Ausbohren des noch von der Durchgangsbohrung (4) umschlossenen Stutzenteils auf einen Durchmesser, der kleiner als der Außendurchmesser des Stutzens ist,
- Ausziehen des Stutzens,
- Einsetzen eines neuen Stutzens in die Durchgangsbohrung (4), Einbringen einer den Stutzen übergreifenden Hülse (15) bis zur Anlage an die Ringfläche (13) des Deckels (2),
- Herstellen einer Schweißnaht (5a, 19) zwischen der Hülse und dem Deckel (2),
- Herstellen einer Schweißnaht (16, 20) zwischen der Hülse und dem Stutzen (3).

2. Verfahren nach Anspruch 1, dadurch gekennzeichnet, daß als Hülse eine mit einem Innengewinde versehene Gewindehülse (15) verwendet wird, die auf ein dem Stutzen (13) zugeordnetes Außengewinde aufgeschraubt wird.

3. Verfahren nach Anspruch 1, dadurch gekennzeichnet, daß zwischen dem Stutzen und der Durchgangsbohrung (4) des Deckels (2) eine Preßsitzverbindung vorgesehen wird.

4. Verfahren nach Anspruch 1, gekennzeichnet durch das Einbringen des neuen Stutzens unter einer relativ zum Deckel wirkenden Vorspannung.

5. Verfahren nach Anspruch 4, gekennzeichnet durch die folgenden Merkmale:
- eine mit einem Innengewinde versehene Gewindehülse (15) wird auf ein dem in die Durchgangsbohrung (4) eingesetzten Stutzen zugeordnetes Außengewinde aufgeschraubt,
- die Vorspannung wird durch Ziehen des an einer Stützfläche (17, 17a anliegenden Stutzen (3) aufgebracht,
- die Gewindehülse (15) wird gegen die Ringfläche (13) angelegt,
- die Schweißnähte (19, 20) werden angebracht.

6. Verfahren nach Anspruch 5, dadurch gekennzeichnet, daß die Stützfläche (17a) senkrecht zur Achse des Stutzens (3) verläuft.

7. Verfahren nach Anspruch 5, dadurch gekennzeichnet, daß die Stützfläche (17) ein in Richtung der Deckeloberseite divergierende Kegelfläche ist.

8. Verfahren nach Anspruch 6, dadurch gekennzeichnet, daß zwischen einer Schulter (22) des Stutzens (3) und der Stützfläche (17a) ein Spannrohr (23) eingesetzt wird, dessen Verformungsweg mindestens so groß ist, wie der Verformungsweg des zwischen Ringfläche (13) und der Stützfläche (17a) des Deckels angeordneten Dekkelbereichs.

9. Verfahren nach Anspruch 8, dadurch gekennzeichnet, daß der Stutzen (3) und das Spannrohr (23) aus gleichem oder unterschiedlichem Werkstoff gebildet werden.

## Claims

1. Method for exchanging a connection piece (3) which passes through a cover (2) of a nuclear reactor pressure vessel for the guidance of a control rod and which is fixed relative to the cover in a passage bore (4) by the use of a welded joint, characterized by the following features:
- the milling-off of the connection piece (3) from the inside (6) of the cover, until a closed annular surface (13), the outside diameter of which is larger than the outside diameter of the connection piece (3), is formed in the underside of the cover,
- the drilling-out of the connection-piece part still surrounded by the passage bore (4), to a diameter which is smaller than the outside diameter of the connection piece,
- the extraction of the connection piece,
- the insertion of a new connection piece into the passage bore (4),
- the introduction of a sleeve (15) engaging over the connection piece, until the said sleeve comes to bear on the annular surface (13) of the cover (2),
- the making of a weld seam (5a, 19) between the sleeve and the cover (2),
- the making of a weld seam (16, 20) between the sleeve and the connection piece (3).

2. Method according to Claim 1, characterized in that the sleeve used is a threaded sleeve (15) which is provided with an internal thread and which is screwed onto an external thread assigned to the connection piece (3).

3. Method according to Claim 1, characterized in that a press-fit joint is provided between the connection piece and the passage bore (4) of the cover (2).

4. Method according to Claim 1, characterized by the introduction of the new connection piece under a pretension acting relative to the cover.

5. Method according to Claim 4, characterized by the following features:
- a threaded sleeve (15) which is provided with an internal thread is screwed onto an external thread assigned to the connection piece inserted into the passage bore (4),
- the pretension is applied by exerting a pull on the connection piece (3) bearing against a supporting surface (17, 17a),
- the threaded sleeve (15) is laid against the annular surface (13),
- the weld seams (19, 20) are applied.

6. Method according to Claim 5, characterized in that the supporting surface (17a) is perpendicular to the axis of the connection piece (3).

7. Method according to Claim 5, characterized in that the supporting surface (17) is a conical surface diverging in the direction of the top side of the cover.

8. Method according to Claim 6, characterized in that there is inserted between a shoulder (22) of the connection piece (3) and the supporting surface (17a) a tension tube (23), the deformation travel of which is at least as great as the deformation travel of the cover region arranged between the annular surface (13) and the supporting surface (17a) of the cover.

9. Method according to Claim 8, characterized in that the connection piece (3) and the tension tube (23) are formed from the same or different material.

## Revendications

1. Procédé de remplacement d'un manchon (3) de guidage d'une barre de contrôle, qui traverse le couvercle (2) d'une cuve sous pression de réacteur nucléaire et est fixé au couvercle, dans un trou de passage (4), par une soudure, caractérisé par les caractéristiques suivantes:
- élimination par fraisage du manchon (3) depuis le côté intérieur (6) du couvercle jusqu'à obtention, sur la face inférieure du couvercle, d'une surface annulaire (13) fermée dont le diamètre est supérieur au diamètre extérieur du manchon (3),
- perçage de la partie du manchon restant dans le trou de passage (4) à un diamètre qui est inférieur au diamètre extérieur du manchon,
- extraction du manchon,
- mise en place d'un nouveau manchon dans le trou de passage (4),
- mise en place d'une douille (15) entourant le manchon de telle sorte que celle-ci vienne en appui sur la surface annulaire (13) du couvercle (2),
- réalisation d'un cordon de soudure (5a, 19) entre la douille et le couvercle (2),
- réalisation d'un cordon de soudure (16, 20) entre la douille et le manchon (3).

2. Procédé selon la revendication 1, caractérisé par le fait que l'on utilise comme douille, une douille (15) filetée pourvue d'un filetage intérieur que l'on visse sur un filetage extérieur associé du manchon (3).

3. Procédé selon la revendication 1, caractérisé par le fait qu'il est prévu un assemblage serré entre le manchon et le trou de passage (4) dans le couvercle (2).

4. Procédé selon la revendication 1, caractérisé par la mise en place du nouveau manchon avec une précontrainte par rapport au couvercle.

5. Procédé selon la revendication 4, caractérisé par les caractéristiques suivantes:
- on visse une douille filetée (15) pourvue d'un filetage intérieur sur un filetage extérieur associé du manchon placé dans le trou de passage (4),
- on applique la précontrainte par traction sur le manchon (3) en appui sur une surface d'appui (17, 17a),
- on accoste la douille filetée (15) contre la surface annulaire (13)
- on réalise les cordons de soudure (19, 20).

6. Procédé selon la revendication 5, caractérisé par le fait que la surface d'appui (17a) s'étend perpendiculairement à l'axe du manchon (3).

7. Procédé selon la revendication 5, caractérisé par le fait que la surface d'appui (17) présente une surface conique qui diverge en direction de la face supérieure du couvercle.

8. Procédé selon la revendication 6, caractérisé par le fait que l'on place entre un épaulement (22) du manchon (3) et la surface d'appui (17a) un tube de serrage (23) dont la course de déformation est au moins égale à la course de déformation de la partie de couvercle entre la surface annulaire (13) et la surface d'appui (17a) du couvercle.

9. Procédé selon la revendication 8, caractérisé par le fait que le manchon (3) et le tube de serrage (23) sont réalisés en un même matériau ou en des matériaux différents.
